# EUROPEAN PATENT SPECIFICATION

(11) **EP 3 757 426 B1**
(45) Date of publication and mention of the grant of the patent: **24.11.2021**
(21) Application number: 20179721.4
(22) Date of filing: 12.06.2020
(51) Int. Cl.: F16H 21/20

(54) **LINEAR DRIVING MECHANISM WITH VARIABLE STROKE VARIED BY A SLANTED MOVING SHAFT**
LINEARER ANTRIEBSMECHANISMUS MIT VARIABLEM HUB, DER DURCH EINE GENEIGTE BEWEGLICHE WELLE VARIIERT WIRD
MÉCANISME D'ENTRAÎNEMENT LINÉAIRE À COURSE VARIABLE VARIÉE PAR UN ARBRE MOBILE INCLINÉ

(30) Priority: 17.06.2019 TW 108120882
(43) Date of publication of application: 30.12.2020
(73) Proprietor: Chok Dee Trading Co., Ltd., Taichung City 407 (TW)
(72) Inventor: Chang, Wei-Yu, Taichung City 407 (TW); Chen, Chih-Rong, Nantou County 557 (TW)
(74) Representative: Straus, Alexander

(56) References cited:
- EP-A2- 0 370 258
- EP-A2- 2 374 565
- FR-A- 1 297 166

## Description

### Field of the Invention

The present invention relates to a linear driving mechanism with variable stroke varied by a slanted moving shaft according to the pre-characterizing clause of claim 1.

### Background of the Invention

Handheld massagers can relieve muscle tension. The massagers currently available on the market are with massaging heads directly connected to propulsion mechanisms driven by motors to perform linear reciprocating movement. However, techniques of prior arts solely allow the motor to drive the massaging head to perform the linear reciprocating movement at varying speeds, that is, the speed of the linear reciprocating movement is adjustable, but the stroke of the linear reciprocating movement is fixed. Therefore, it causes the impact depth of the massaging head immutable, which limits further application of the mechanism.

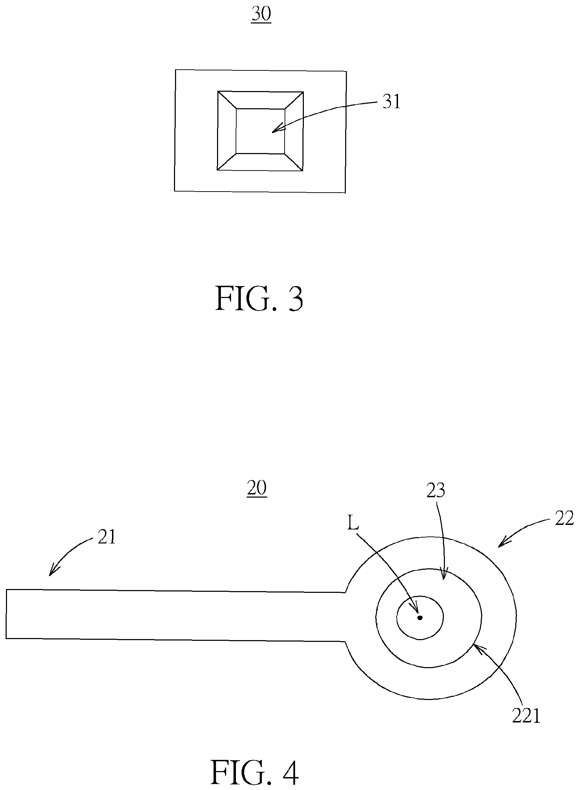

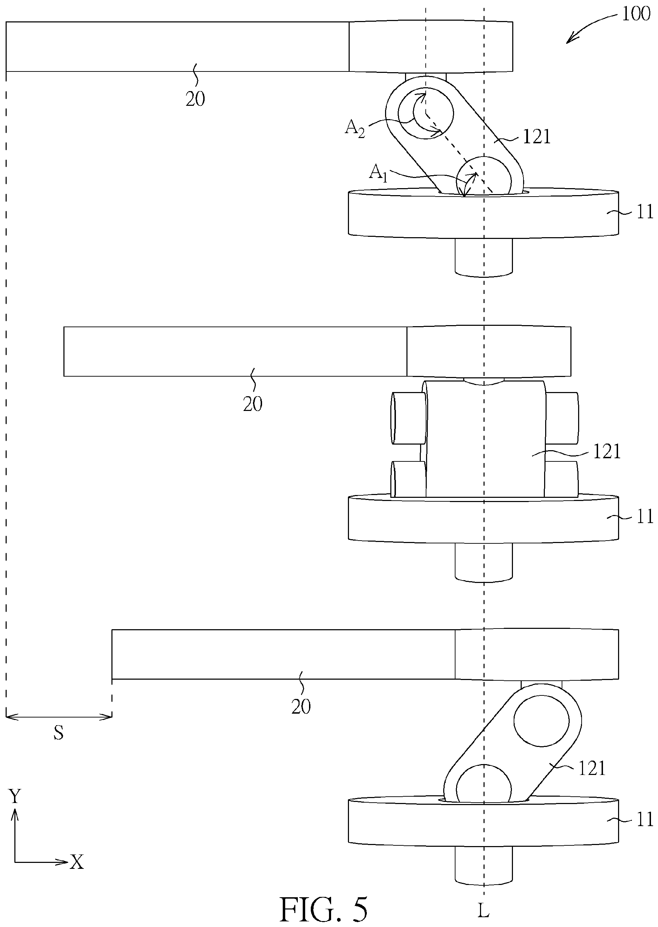

Document EP 0 370 258 A2 shows a linear driving mechanism (see for example Fig. 4 and 5) with variable stroke wherein, the linear driving mechanism comprises:a main body comprising:a seat comprising a rotating shaft (34) whereon a rotating axis is formed; and a moving shaft, a linear moving component (24) comprising a distal portion and a proximal portion relative to the distal portion, the linear moving component being able to move close to or away from the seat along a first direction parallel to the rotating axis; a guiding component (see housing 23 section in Fig. 5) for guiding a linear movement of the linear moving component along a second direction perpendicular to the rotating axis, a guiding slot being formed on the guiding component, the distal portion of the linear moving component being located inside the guiding slot and slidable relative to the guiding slot; and a driving component (not explicitly shown but explicitly mentioned in the description as "Hauptantrieb") connected to the rotating shaft, the driving component being used for driving the main body to rotate around the rotating axis.

### Summary of the Invention

This is mind, the present invention aims at providing designs of a linear driving mechanism with variable stroke.

This is achieved by a linear driving mechanism with variable stroke varied by a slanted moving shaft according to claim 1. The dependent claims pertain to corresponding further developments and improvements.

As will be seen more clearly from the detail description following below, the claimed linear driving mechanism includes a main body, a linear moving component, a guiding component and a driving component. The main body includes a seat and a moving shaft. The seat includes a rotating shaft whereon a rotating axis is formed. The moving shaft includes a first shaft and a second shaft. The first shaft includes a first end and a second end. The first end is connected to the seat, and the second end is connected to the second shaft. A longitudinal axis of the first shaft is reclined relative to the rotating axis. The linear moving component includes a distal portion and a proximal portion relative to the distal portion. A driving slot is formed on the proximal portion of the linear moving component. The moving shaft passes through the driving slot. The linear moving component is able to move close to or away from the seat along a first direction parallel to the rotating axis. The guiding component is for guiding a linear movement of the linear moving component along a second direction perpendicular to the rotating axis. A guiding slot is formed on the guiding component. The distal portion of the linear moving component is located inside the guiding slot and slidable relative to the guiding slot. The driving component is connected to the rotating shaft. The driving component is used for driving the main body to rotate around the rotating axis. The moving shaft applies force to a wall of the driving slot to drive the linear moving component to move linearly along the second direction when the driving component drives the main body to rotate. A stroke of the linear movement of the linear moving component along the second direction varies along with a distance between the linear moving component and the seat along the first direction.

According to an embodiment of the present invention, a portion of the first shaft is located inside the driving slot. The first shaft is connected to a periphery of the seat. The longitudinal axis of the first shaft intersects with the rotating axis, and a longitudinal axis of the second shaft coincides with the rotating axis.

According to an embodiment of the present invention, the driving slot is a rectangular hollow slot and includes two long inner walls symmetrical to each other and two short inner walls symmetrical to each other. A length of each long inner wall is greater a diameter of the seat, and a length of each short inner wall is less than the diameter of the seat.

According to an embodiment of the present invention, the first shaft applies force to the two long inner walls of the driving slot to drive the linear moving component to move linearly along the second direction. When the distance between the linear moving component and the seat along the first direction decreases, a displacement of a movement of the portion of the first shaft along the second direction increases. As a result, it causes an increase of the stroke of the linear movement of the linear moving component along the second direction. Likewise, when the distance between the linear moving component and the seat along the first direction increases, the displacement of the movement of the portion of the first shaft along the second direction decreases. As a result, it causes a decrease of the stroke of the linear movement of the linear moving component along the second direction.

According to an embodiment of the present invention, each long inner wall and each short inner wall are slanted walls.

According to an embodiment of the present invention, the seat is cuboid.

According to an embodiment of the present invention, the driving slot comprises an inner wall. A length of a straight line between any two points on the inner wall passing through the rotating axis is not less than a maximum diameter of the first shaft and not greater than a maximum diameter of the seat.

According to an embodiment of the present invention, a portion of the first shaft is located inside the driving slot. The first shaft applies force to the inner wall of the driving slot to drive the linear moving component to move linearly along the second direction. When the distance between the linear moving component and the seat along the first direction decreases, a displacement of a movement of the portion of the first shaft along the second direction increases. As a result, it causes an increase of the stroke of the linear movement of the linear moving component along the second direction. Likewise, when the distance between the linear moving component and the seat along the first direction increases, the displacement of the movement of the portion of the first shaft along the second direction decreases. As a result, it causes a decrease of the stroke of the linear movement of the linear moving component along the second direction.

According to an embodiment of the present invention, the first shaft is a stepped shaft or a straight shaft.

According to an embodiment of the present invention, a portion of the second shaft is located inside the driving slot. The longitudinal axis of the first shaft intersects with the rotating axis. The first end of the first shaft is connected to the seat by a movable joint. A first included angle between the first shaft and the seat is adjustable. The second end of the first shaft is connected to the second shaft by another movable joint. A second included angle between the first shaft and the second shaft is adjustable, and a longitudinal axis of the second shaft is parallel to and offset from the rotating axis by adjusting the first included angle and the second included angle.

According to an embodiment of the present invention, the driving slot includes an inner wall. The second shaft applies force to the inner wall of the driving slot to drive the linear moving component to move linearly along the second direction. A displacement of a movement of the portion of the second shaft along the second direction is not less than a diameter of the portion of the second shaft. When the first included angle decreases and the second included angle increases, the displacement of the movement of the portion of the second shaft along the second direction increases. As a result, it causes an increase of the stroke of the linear movement of the linear moving component along the second direction. Likewise, when the first included angle increases and the second included angle decreases, the displacement of the movement of the portion of the second shaft along the second direction decreases. As a result, it causes a decrease of the stroke of the linear movement of the linear moving component along the second direction.

According to an embodiment of the present invention, the first shaft is connected to the seat and the second shaft by two pivoting joints.

According to an embodiment of the present invention, the linear driving mechanism is adapted for a handheld rehabilitation device or a handheld machine tool.

In summary, in the present invention, the stroke of the linear moving component of the linear driving mechanism can be changed by approaching or distancing the linear moving component and the seat of the main body to increase or decrease the displacement of the moving shaft located inside the driving slot. Therefore, the proposed linear driving mechanism is both simple and flexible.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a linear driving mechanism according to a first embodiment of the present invention,
FIG. 2 is an exploded diagram of the linear driving mechanism according to the first embodiment of the present invention,
FIG. 3 is a diagram of a guiding component according to the first embodiment of the present invention,
FIG. 4 is a diagram of a linear moving component according to the first embodiment of the present invention,
FIG. 5 is a diagram of the linear driving mechanism with a stroke cycle according to the first embodiment of the present invention,
FIG. 6 is a diagram of a linear driving mechanism according to a second embodiment of the present invention,
FIG. 7 is an exploded diagram of the linear driving mechanism according to the second embodiment of the present invention,
FIG. 8 is a diagram of a linear moving component according to the second embodiment of the present invention,
FIG. 9 is a diagram of the linear driving mechanism with a stroke cycle according to the second embodiment of the present invention,
FIG. 10 is a diagram of a linear driving mechanism according to a third embodiment of the present invention,
FIG. 11 is a diagram of a linear driving mechanism according to a fourth embodiment of the present invention,
FIG. 12 is a diagram of a main body shown in FIG. 10 according to the third embodiment of the present invention, and
FIG. 13 is a diagram of a main body shown in FIG. 11 according to the fourth embodiment of the present invention.

### Detailed Description

Certain terms are used throughout the description and following claims to refer to particular components. As one skilled in the art will understand, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to..." In addition, to simplify the descriptions and make it more convenient to compare between each embodiment, identical components are marked with the same reference numerals in each of the following embodiments. Please note that the figures are only for illustration and the figures may not be to scale. Also, the term "couple" is intended to mean either an indirect or direct electrical/mechanical connection. Thus, if a first device is coupled to a second device, that connection may be through a direct electrical/mechanical connection, or through an indirect electrical/mechanical connection via other devices and connections.

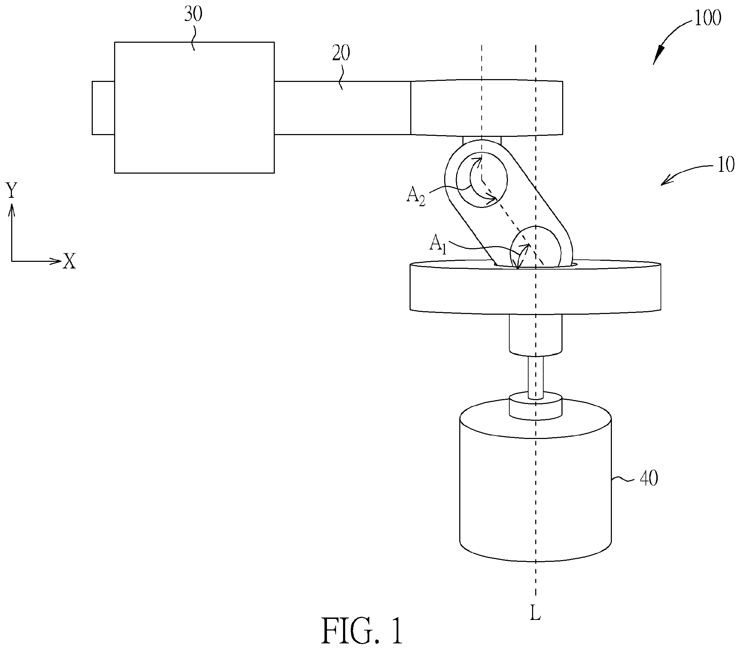

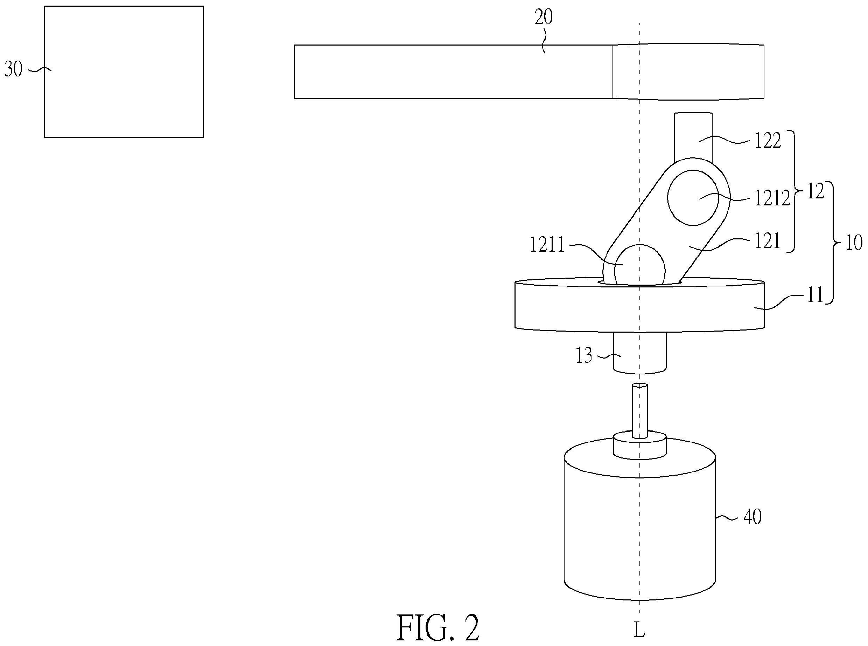

Please refer to FIG. 1 and FIG. 2. FIG. 1 is a diagram of a linear driving mechanism 100 according to a first embodiment of the present invention. FIG. 2 is an exploded diagram of the linear driving mechanism 100 according to the first embodiment of the present invention. The linear driving mechanism 100 with variable stroke can be adapted for a handheld rehabilitation device or a handheld machine tool, such as a handheld massager. However, the present invention is not limited thereto. As shown in FIG. 1 and FIG. 2, the linear driving mechanism 100 includes a main body 10, a linear moving component 20, a guiding component 30 and a driving component 40. The linear moving component 20 can move linearly along an X direction back and forth, and a stroke of a linear movement of the linear moving component 20 along the X direction can vary along with a distance between the linear moving component 20 and the main body 10 along a Y direction. The main body 10 includes a seat 11 and a moving shaft 12. The seat 11 includes a rotating shaft 13 whereon a rotating axis L is formed. In this embodiment, the seat 11 can be a circular disc, and the rotating axis L can be perpendicular to the seat 11. The moving shaft 12 includes a first shaft 121 and a second shaft 122. The first shaft 121 is connected to both the seat 11 and the second shaft 122 at its ends, and a longitudinal axis of the first shaft 121 is reclined relative to the rotating axis L.

Please refer to FIG. 1 to FIG. 4. FIG. 3 is a diagram of the guiding component 30 according to the first embodiment of the present invention. FIG. 4 is a diagram of the linear moving component 20 according to the first embodiment of the present invention. As shown in FIG. 1 to FIG. 4, the linear moving component 20 includes a distal portion 21 and a proximal portion 22 relative to the distal portion 21. Preferably, the proximal portion 22 can be opposite to the distal portion 21. A driving slot 23 is formed on the proximal portion 22 of the linear moving component 20. The moving shaft 12 passes through the driving slot 23 on the proximal portion 22. The linear moving component 20 is able to move close to or away from the seat 11 along the Y direction parallel to the rotating axis L. In this embodiment, the second shaft 122 can be partially located inside the driving slot 23 on the proximal portion 22. A first end 1211 of the first shaft 121 is connected to the seat 11 by a movable joint, and a second end 1212 of the first shaft 121 is movably connected to the second shaft 122 by another movable joint. A first included angle A1 between the first shaft 121 and the seat 11 is adjustable, and a second included angle A2 between the first shaft 121 and the second shaft 122 is adjustable. The longitudinal axis of the first shaft 121 intersects with the rotating axis L. More specifically, the first end 1211 and the second end 1212 of the first shaft 121 can be connected to the seat 11 and the second shaft 122 by two pivoting joints. In such a way, when the linear moving component 20 moves close to or away from the seat 11 along the Y direction parallel to the rotating axis L, e.g., when an external force or an external driving mechanism drives the seat 11 and the driving component 40 and/or the linear moving component 20 and the guiding component 30 to move along the Y direction, a longitudinal axis of the second shaft 122 can remain parallel to and offset from the rotating axis L by adjusting the first included angle A1 and the second included angle A2.

A guiding slot 31 is formed on the guiding component 30. The distal portion 21 of the linear moving component 20 is located inside the guiding slot 31 and slidable relative to the guiding slot 31, so that the linear moving component 20 can be guided to move linearly along the X direction substantially perpendicular to the rotating axis L. The driving component 40 is connected to the rotating shaft 13. The driving component 40 is used for driving the main body 10 to rotate around the rotating axis L. Preferably, the driving component 40 can be a motor. As mentioned above, a portion of the second shaft 122 is located inside the driving slot 23 on the proximal portion 22. Since the driving slot 23 includes an inner wall 221, the portion of the second shaft 122 located inside the driving slot 23 can apply force to the inner wall 221 to move the linear moving component 20 linearly along the X direction back and forth when the driving component 40 drives the main body 10 to rotate. Furthermore, in this embodiment, the portion of the second shaft 122 located inside the driving slot 23 applies force to the inner wall 221 of the driving slot 23 and forms a displacement along the X direction. The displacement can be not less than a diameter of the portion of the second shaft 122 located inside the driving slot 23. In other words, the displacement of the portion of the second shaft 122, which is located inside the driving slot 23 and applies force to the inner wall 221 along the X direction, can be not less than the diameter of the portion of the second shaft 122, which is located inside the driving slot 23.

Please refer to FIG. 5. FIG. 5 is a diagram of the linear driving mechanism 100 with a stroke cycle according to the first embodiment of the present invention. As shown in FIG. 5, a stroke S is defined by a distance between a dead center at the top and a dead center at the bottom. In an embodiment, a length of the first shaft 121 can be 20 millimeters, a diameter of the seat 11 can be 40 millimeters, the first included angle A1 can be 68 degrees, and the stroke S can be about 15 millimeters. When the linear moving component 20 moves close to or away from the seat 11 along the Y direction, i.e., a first direction, parallel to the rotating axis L, the first included angle A1 and the second included angle A2 change accordingly making the stroke S of the linear moving component 20 to change along the X direction, i.e., a second direction, substantially perpendicular to the rotating axis L. For example, when the linear moving component 20 moves away from the seat 11 along the Y direction to increase the first included angle A1 to 83 degrees and to decrease the second included angle A2, the displacement of the portion of the second shaft 122, which is located inside the driving slot 23 and applies force to the inner wall 221, along the X direction is decreased. As a result, the stroke S of the linear moving component 20 along the X direction can be decreased to about 5 millimeters. On the other hand, when the linear moving component 20 moves close to the seat 11 along the Y direction to decrease the first included angle A1 and to increase the second included angle A2, the displacement of the portion of the second shaft 122, which is located inside the driving slot 23 and applies force to the inner wall 221, along the X direction is increased. As a result, the stroke S of the linear moving component 20 along the X direction can be increased. In other words, the stroke S of the linear moving component 20 along the X direction varies along with the distance between the linear moving component 20 and the seat 11 along the Y direction.

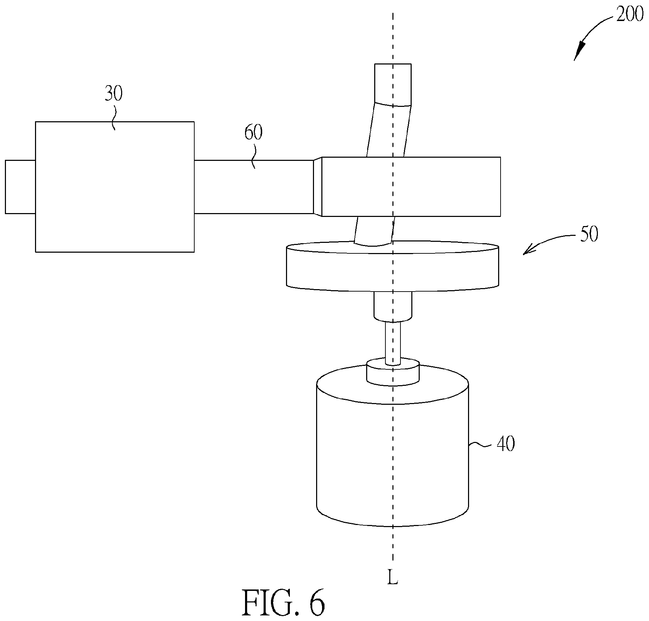

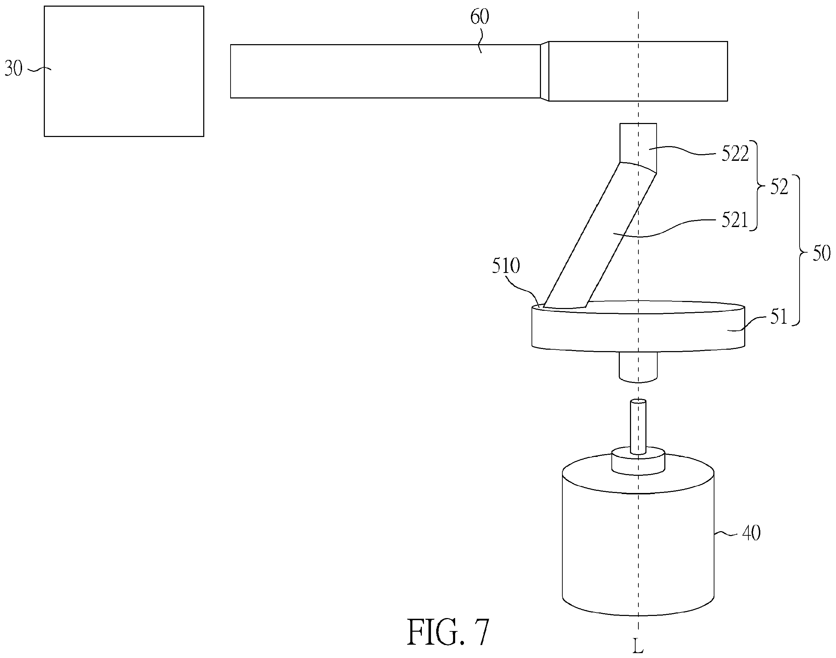

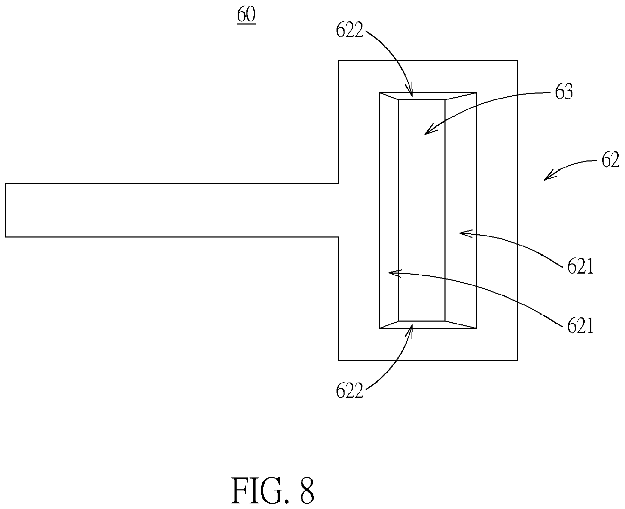

Please refer to FIG. 6 to FIG. 8. FIG. 6 is a diagram of a linear driving mechanism 200 according to a second embodiment of the present invention. FIG. 7 is an exploded diagram of the linear driving mechanism 200 according to the second embodiment of the present invention. FIG. 8 is a diagram of a linear moving component 60 according to the second embodiment of the present invention. As shown in FIG. 6 to FIG. 8, in this embodiment, the linear driving mechanism 200 includes a main body 50, the linear moving component 60, the guiding component 30 and the driving component 40. The main body 50 includes a seat 51 and a moving shaft 52. The seat 51 can be a circular disc. The moving shaft 52 includes a first shaft 521 and a second shaft 522. The first shaft 521 can be a straight shaft. The first shaft 521 is connected to a periphery 510 of the seat 51 and the second shaft 522 by two fixed joints. A longitudinal axis of the first shaft 521 intersects with the rotating axis L, and a longitudinal axis of the second shaft 522 coincides with the rotating axis L. The first shaft 521 is partially located inside a driving slot formed on a proximal portion 62 of the linear moving component 60.

As shown in FIG. 8, a driving slot 63 formed on the proximal portion 62 is a rectangular hollow slot and includes two long inner walls 621 symmetrical to each other and two short inner walls 622 symmetrical to each other. In this embodiment, each long inner wall 621 and each short inner wall 622 can be slanted wall. In order to drive the linear moving component 60 to move linearly by the moving shaft 52 when the driving component 40 drives the main body 50 to rotate, in a practical application, a length of each long inner wall 621 can be greater than a diameter of the seat 51, and a length of each short inner wall 622 can be less than the diameter of the seat 51.

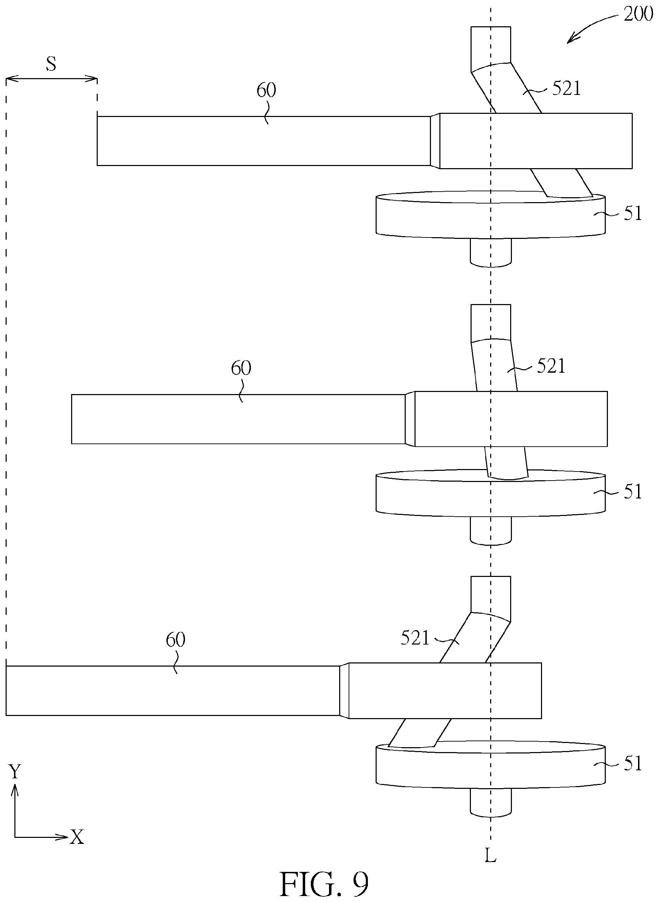

Please refer to FIG. 9. FIG. 9 is a diagram of the linear driving mechanism 200 with a stroke cycle according to the second embodiment of the present invention. As shown in FIG. 9, the stroke S is defined by a distance between a dead center at the top and a dead center at the bottom. In an embodiment, a length of the first shaft 521 can be 20 millimeters, the diameter of the seat 51 can be 22 millimeters, the first included angle A1 between the first shaft 521 and the seat 51 can be 60 degrees. When the linear moving component 60 moves close to the seat 51 along the Y direction parallel to the rotating axis L, a displacement of a portion of the first shaft 521, which is located inside the driving slot 63 and applies force to the two long inner walls 621, along the X direction is increased. As a result, it causes an increase of the stroke S of the linear moving component 60 along the X direction. For example, when the linear moving component 60 is at a lowest position on the first shaft 521, the stroke S is about 15 millimeters. On the other hand, when the linear moving component 60 moves away from the seat 51 along the Y direction substantially parallel to the rotating axis L, the displacement of the portion of the first shaft 521, which is located inside the driving slot 63 and applies force to the two long inner walls 621, along the X direction is decreased. As a result, it causes a decrease of the stroke S of the linear moving component 60 along the X direction. For example, when the linear moving component 60 is at a highest position on the first shaft 521, the stroke S is about 5 millimeters. In other words, the stroke S of the linear moving component 60 along the X direction varies along with the distance between the linear moving component 60 and the seat 51 along the Y direction.

It should be clarified that, in another embodiment, the main body 50 of the second embodiment also can cooperate with the linear moving component 20 of the first embodiment whereon the circular driving slot 23 is formed. The portion of the first shaft 521 located inside the driving slot 23 can apply force to the inner wall 221 along the X direction to drive the linear moving component 20 to move linearly along the X direction. In this embodiment, a length of a straight line between any two points on the inner wall 221 passing through the rotating axis L can be not less than a maximum diameter of the first shaft 521 and not greater than a maximum diameter of the seat 51. When the linear moving component 20 moves close to or away from the seat 51, the displacement of the portion of the first shaft 521 can be changed to change the stroke S of the linear moving component 20 along the X direction accordingly. In other words, the distance between the linear moving component 20 and the seat 51 along the Y direction can be changed, and as a result, change the stroke S of the linear moving component 20 along the X direction.

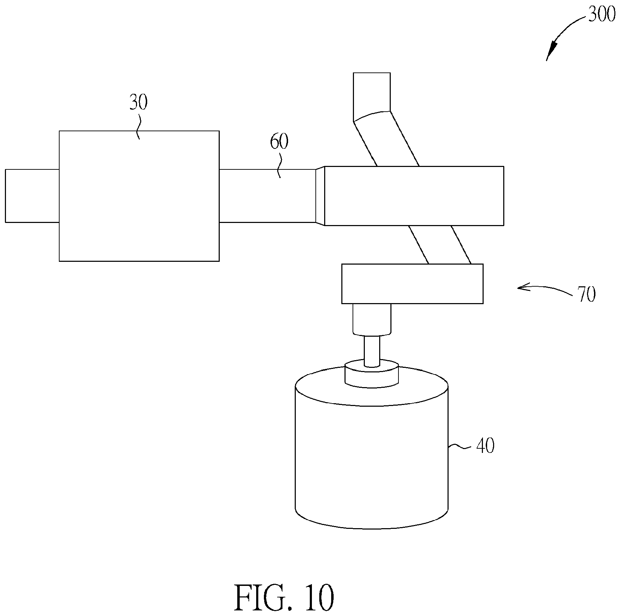

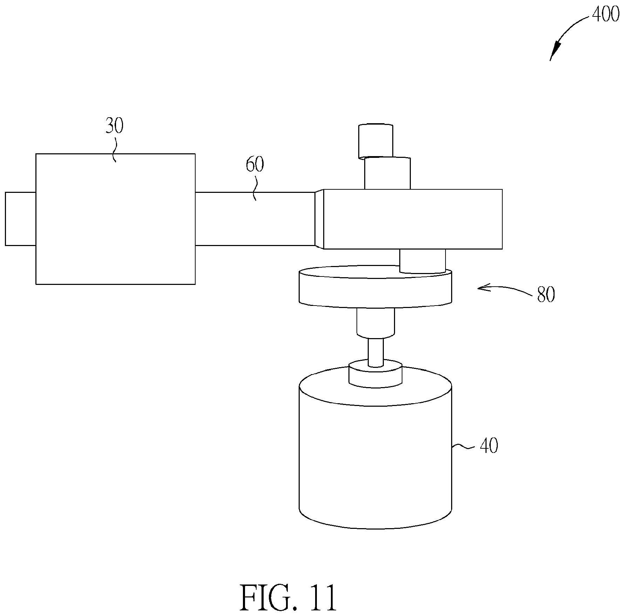

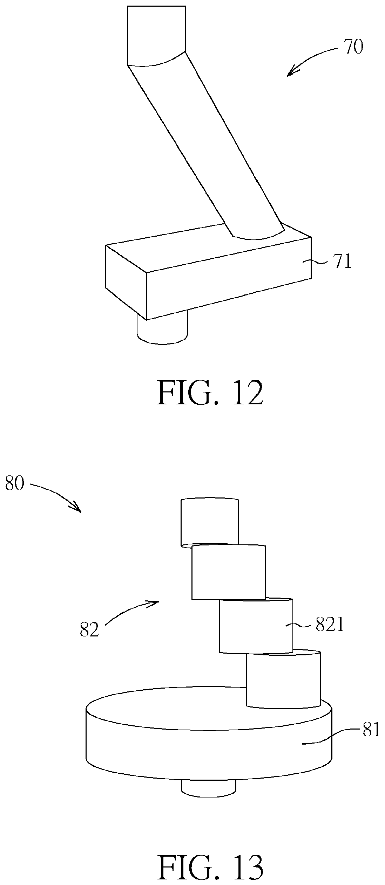

Please refer to FIG. 10 to FIG. 13. FIG. 10 is a diagram of a linear driving mechanism 300 according to a third embodiment of the present invention. FIG. 11 is a diagram of a linear driving mechanism 400 according to a fourth embodiment of the present invention. FIG. 12 is a diagram of a main body 70 shown in FIG. 10 according to the third embodiment of the present invention. FIG. 13 is a diagram of a main body 80 shown in FIG. 11 according to the fourth embodiment of the present invention. As shown in FIG. 10 and FIG. 12, a seat 71 of the main body 70 of the linear driving mechanism 300 of the third embodiment can be a cuboid. Other structures of the third embodiment are similar to the ones of the second embodiment. Detailed description is omitted herein for simplicity. As shown in FIG. 11 and FIG. 13, different from the aforementioned embodiments, the linear driving mechanism 400 includes a main body 80 with a moving shaft 82. A first shaft 821 of the moving shaft 82 is a stepped shaft. When the linear moving component 60 moves close to or away from a seat 81 of the main body 80 to locate different segments of the first shaft 821 inside the driving slot of the linear moving component 60, the displacement of one of the segments of the first shaft 821, which is located inside the driving slot, along the X direction can be increased or decreased. As a result, it causes an increase or a decrease of the stroke of the linear moving component 60 along the X direction accordingly.

In contrast to the prior art, in the present invention, the stroke of the linear moving component of the linear driving mechanism can be changed by approaching or distancing the linear moving component and the seat of the main body to increase or decrease the displacement of the moving shaft located inside the driving slot. Therefore, the proposed linear driving mechanism is both simple and flexible.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A linear driving mechanism (100, 200, 300, 400) with variable stroke, the linear driving mechanism (100, 200, 300, 400) comprises:
a main body (10, 50, 70, 80) comprising:
a seat (11, 51, 71, 81) comprising a rotating shaft (13) whereon a rotating axis (L) is formed; and
a moving shaft (12, 52, 82) comprising a first shaft (121, 521, 821) and a second shaft (122, 522), the first shaft (121, 521, 821) comprising a first end (1211) and a second end (1212), the first end (1211) being connected to the seat (11, 51, 71, 81), the second end (1212) being connected to the second shaft (122, 522), a longitudinal axis of the first shaft (121, 521, 821) being reclined relative to the rotating axis (L);
a linear moving component (20, 60) comprising a distal portion (21) and a proximal portion (22, 62) relative to the distal portion (21), a driving slot (23, 63) being formed on the proximal portion (22, 62) of the linear moving component (20, 60), the moving shaft (12, 52, 82) passing through the driving slot (23, 63), the linear moving component (20, 60) being able to move close to or away from the seat (11, 51, 71, 81) along a first direction parallel to the rotating axis (L);
a guiding component (30) for guiding a linear movement of the linear moving component (20, 60) along a second direction perpendicular to the rotating axis (L), a guiding slot (31) being formed on the guiding component (30), the distal portion (21) of the linear moving component (20, 60) being located inside the guiding slot (31) and slidable relative to the guiding slot (31); and
a driving component (40) connected to the rotating shaft (13), the driving component (40) being used for driving the main body (10, 50, 70, 80) to rotate around the rotating axis (L);
wherein the moving shaft (12, 52, 82) applies a force to a wall of the driving slot (23, 63) to drive the linear moving component (20, 60) to move linearly along the second direction when the driving component (40) drives the main body (10, 50, 70, 80) to rotate;
wherein a stroke (S) of the linear movement of the linear moving component (20, 60) along the second direction varies along with a distance between the linear moving component (20, 60) and the seat (11, 51, 71, 81) along the first direction.

2. The linear driving mechanism (200, 300, 400) of claim 1, **characterized in that** a portion of the first shaft (521, 821) is located inside the driving slot (63), the first shaft (521, 821) is connected to a periphery of the seat (51, 71, 81), the longitudinal axis of the first shaft (521, 821) intersects with the rotating axis (L), and a longitudinal axis of the second shaft (522) coincides with the rotating axis (L).

3. The linear driving mechanism (200, 300, 400) of claim 2, **characterized in that** the driving slot (63) is a rectangular hollow slot and comprises two long inner walls (621) symmetrical to each other and two short inner walls (622) symmetrical to each other, a length of each long inner wall (621) is greater than a diameter of the seat (51, 71, 81), and a length of each short inner wall (622) is less than the diameter of the seat (51, 71, 81).

4. The linear driving mechanism (200, 300, 400) of claim 3, **characterized in that** the first shaft (521, 821) applies the force to the two long inner walls (621) of the driving slot (63) to drive the linear moving component (60) to move linearly along the second direction, when the distance between the linear moving component (60) and the seat (51, 71, 81) along the first direction decreases, a displacement of a movement of the portion of the first shaft (521, 821) along the second direction increases, so that the stroke (S) of the linear movement of the linear moving component (60) along the second direction increases, and when the distance between the linear moving component (60) and the seat (51, 71, 81) along the first direction increases, the displacement of the movement of the portion of the first shaft (521, 821) along the second direction decreases, so that the stroke (S) of the linear movement of the linear moving component (60) along the second direction decreases.

5. The linear driving mechanism (200, 300, 400) of claim 3, **characterized in that** each long inner wall (621) and each short inner wall (622) are slanted walls.

6. The linear driving mechanism (300) of claim 1, **characterized in that** the seat (71) is cuboid.

7. The linear driving mechanism (100, 200) of claim 1, **characterized in that** the driving slot (23) comprises an inner wall (221), a length of a straight line between any two points on the inner wall (221) passing through the rotating axis (L) is not less than a maximum diameter of the first shaft (121) and not greater than a maximum diameter of the seat (11).

8. The linear driving mechanism (100, 200) of claim 7, **characterized in that** a portion of the first shaft (521) is located inside the driving slot (23), the first shaft (521) applies the force to the inner wall (221) of the driving slot (23) to drive the linear moving component (20) to move linearly along the second direction, when the distance between the linear moving component (20) and the seat (51) along the first direction decreases, a displacement of a movement of the portion of the first shaft (521) along the second direction increases, so that the stroke (S) of the linear movement of the linear moving component (20) along the second direction increases, and when the distance between the linear moving component (20) and the seat (51) along the first direction increases, the displacement of the movement of the portion of the first shaft (521) along the second direction decreases, so that the stroke (S) of the linear movement of the linear moving component (20) along the second direction decreases.

9. The linear driving mechanism (100, 200, 300, 400) of any one of claims 1 to 8, **characterized in that** the first shaft (121, 521, 821) is a stepped shaft or a straight shaft.

10. The linear driving mechanism (100) of claim 1, **characterized in that** a portion of the second shaft (122) is located inside the driving slot (23), the longitudinal axis of the first shaft (121) intersects with the rotating axis (L), the first end (1211) of the first shaft (121) is connected to the seat (11) by a movable joint, a first included angle (A1) between the first shaft (121) and the seat (11) is adjustable, the second end (1212) of the first shaft (121) is connected to the second shaft (122) by another movable joint, a second included angle (A2) between the first shaft (121) and the second shaft (122) is adjustable, and a longitudinal axis of the second shaft (122) is parallel to and offset from the rotating axis (L) by adjusting the first included angle (A1) and the second included angle (A2).

11. The linear driving mechanism (100) of claim 10, **characterized in that** the driving slot (23) comprises an inner wall (221), the second shaft (122) applies the force to the inner wall (221) of the driving slot (23) to drive the linear moving component (20) to move linearly along the second direction, a displacement of a movement of the portion of the second shaft (122) along the second direction is not less than a diameter of the portion of the second shaft (122), when the first included angle (A1) decreases and the second included angle (A2) increases, the displacement of the movement of the portion of the second shaft (122) along the second direction increases, so that the stroke (S) of the linear movement of the linear moving component (20) along the second direction increases, and when the first included angle (A1) increases and the second included angle (A2) decreases, the displacement of the movement of the portion of the second shaft (122) along the second direction decreases, so that the stroke (S) of the linear movement of the linear moving component (20) along the second direction decreases.

12. The linear driving mechanism (100) of claim 10, **characterized in that** the first shaft (121) is connected to the seat (11) and the second shaft (122) by two pivoting joints.

13. The linear driving mechanism (100, 200, 300, 400) of any one of claims 1 to 12, **characterized in that** the linear driving mechanism (100, 200, 300, 400)) is adapted for a handheld rehabilitation device or a handheld machine tool.

## Patentansprüche

1. Linearantriebsmechanismus (100, 200, 300, 400) mit variablem Hub, worin der Linearantriebsmechanismus (100, 200, 300, 400) umfasst:
einen Hauptkörper (10, 50, 70, 80), der umfasst:
einen Sitz (11, 51, 71, 81) mit einer Drehwelle (13), auf der eine Drehachse (L) ausgebildet ist; und
eine bewegbare Welle (12, 52, 82), die eine erste Welle (121, 521, 821) und eine zweite Welle (122, 522) umfasst, worin die erste Welle (121, 521, 821) ein erstes Ende (1211) und ein zweites Ende (1212) umfasst, worin das erste Ende (1211) mit dem Sitz (11, 51, 71, 81) verbunden ist, worin das zweite Ende (1212) mit der zweiten Welle (122, 522) verbunden ist, worin eine Längsachse der ersten Welle (121, 521, 821) relativ zur Drehachse (L) geneigt ist;
ein linear bewegbare Komponente (20, 60), die einen distalen Abschnitt (21) und einen proximalen Abschnitt (22, 62) relativ zu dem distalen Abschnitt (21) umfasst, worin ein Antriebsschlitz (23, 63) an dem proximalen Abschnitt (22, 62) der linear bewegbaren Komponente (20, 60) ausgebildet ist, worin die bewegbare Welle (12, 52, 82) durch den Antriebsschlitz (23, 63) hindurchgeht, worin die linear bewegbare Komponente (20, 60) geeignet ist, sich entlang einer ersten Richtung parallel zu der Drehachse (L) in die Nähe des Sitzes (11, 51, 71, 81) oder von diesem weg zu bewegen;
eine Führungskomponente (30) zum Führen einer linearen Bewegung der linear bewegbaren Komponente (20, 60) entlang einer zweiten Richtung senkrecht zu der Drehachse (L), worin ein Führungsschlitz (31) an der Führungskomponente (30) ausgebildet ist, worin der distale Abschnitt (21) der linear bewegbaren Komponente (20, 60) innerhalb des Führungsschlitzes (31) angeordnet und relativ zu dem Führungsschlitz (31) verschiebbar ist; und
eine Antriebskomponente (40), die mit der Drehwelle (13) verbunden ist, wobei die Antriebskomponente (40) zum Antrieb des Hauptkörpers (10, 50, 70, 80) verwendet wird, um sich um die Drehachse (L) zu drehen;
wobei die bewegbare Welle (12, 52, 82) eine Kraft auf eine Wand des Antriebsschlitzes (23, 63) ausübt, um die linear bewegbare Komponente (20, 60) anzutreiben, sich linear entlang der zweiten Richtung zu bewegen, wenn die Antriebskomponente (40) den Hauptkörper (10, 50, 70, 80) zum Drehen antreibt;
wobei ein Hub (S) der linearen Bewegung der linear bewegbaren Komponente (20, 60) entlang der zweiten Richtung zusammen mit einer Entfernung zwischen der linear bewegbaren Komponente (20, 60) und dem Sitz (11, 51, 71, 81) entlang der ersten Richtung variiert.

2. Linearantriebsmechanismus (200, 300, 400) nach Anspruch 1, **dadurch gekennzeichnet, dass** ein Abschnitt der ersten Welle (521, 821) innerhalb des Antriebsschlitzes (63) angeordnet ist, die erste Welle (521, 821) mit einem Umfang des Sitzes (51, 71, 81) verbunden ist, die Längsachse der ersten Welle (521, 821) sich mit der Drehachse (L) schneidet und eine Längsachse der zweiten Welle (522) mit der Drehachse (L) zusammenfällt.

3. Linearantriebsmechanismus (200, 300, 400) nach Anspruch 2, **dadurch gekennzeichnet, dass** der Antriebsschlitz (63) ein rechteckiger Hohlschlitz ist und zwei lange Innenwände (621), die symmetrisch zueinander sind, und zwei kurze Innenwände (622) umfasst, die symmetrisch zueinander sind, worin eine Länge jeder langen Innenwand (621) größer als ein Durchmesser des Sitzes (51, 71, 81) ist und eine Länge jeder kurzen Innenwand (622) kleiner als der Durchmesser des Sitzes (51, 71, 81) ist.

4. Linearantriebsmechanismus (200, 300, 400) nach Anspruch 3, **dadurch gekennzeichnet, dass** die erste Welle (521, 821) die Kraft auf die beiden langen Innenwände (621) des Antriebsschlitzes (63) ausübt, um die linear bewegbare Komponente (60) anzutreiben, damit sich diese linear entlang der zweiten Richtung bewegt, wenn sich der Abstand zwischen der linear bewegbaren Komponente (60) und dem Sitz (51, 71, 81) entlang der ersten Richtung verringert, eine Versetzung einer Bewegung des Abschnitts der ersten Welle (521, 821) entlang der zweiten Richtung zunimmt, so dass der Hub (S) der linearen Bewegung der linear bewegbaren Komponente (60) entlang der zweiten Richtung zunimmt, und wenn der Abstand zwischen der linear bewegbaren Komponente (60) und dem Sitz (51, 71, 81) entlang der ersten Richtung zunimmt, sich die Versetzung der Bewegung des Abschnitts der ersten Welle (521, 821) entlang der zweiten Richtung verringert, so dass der Hub (S) der linearen Bewegung der linear bewegbaren Komponente (60) entlang der zweiten Richtung abnimmt.

5. Linearantriebsmechanismus (200, 300, 400) nach Anspruch 3, **dadurch gekennzeichnet, dass** jede lange Innenwand (621) und jede kurze Innenwand (622) schräge Wände sind.

6. Linearantriebsmechanismus (300) nach Anspruch 1, **dadurch gekennzeichnet, dass** der Sitz (71) quaderförmig ist.

7. Linearantriebsmechanismus (100, 200) nach Anspruch 1, **dadurch gekennzeichnet, dass** der Antriebsschlitz (23) eine Innenwand (221) aufweist, worin eine Länge einer geraden Linie zwischen zwei beliebigen Punkten auf der Innenwand (221), die durch die Drehachse (L) verläuft, nicht kleiner als ein maximaler Durchmesser der ersten Welle (121) und nicht größer als ein maximaler Durchmesser des Sitzes (11) ist.

8. Linearantriebsmechanismus (100, 200) nach Anspruch 7, **dadurch gekennzeichnet, dass** ein Abschnitt der ersten Welle (521) innerhalb des Antriebsschlitzes (23) angeordnet ist, die erste Welle (521) die Kraft auf die Innenwand (221) des Antriebsschlitzes (23) ausübt, um die linear bewegbare Komponente (20) anzutreiben, sich linear entlang der zweiten Richtung zu bewegen, und darin dass, wenn sich der Abstand zwischen der linear bewegbaren Komponente (20) und dem Sitz (51) entlang der ersten Richtung verringert, eine Verschiebung einer Bewegung des Abschnitts der ersten Welle (521) entlang der zweiten Richtung zunimmt, so dass der Hub (S) der linearen Bewegung der linear bewegbaren Komponente (20) entlang der zweiten Richtung zunimmt, und wenn der Abstand zwischen der linear bewegbaren Komponente (20) und dem Sitz (51) entlang der ersten Richtung zunimmt, die Versetzung der Bewegung des Abschnitts der ersten Welle (521) entlang der zweiten Richtung abnimmt, so dass der Hub (S) der linearen Bewegung der linear bewegbaren Komponente (20) entlang der zweiten Richtung abnimmt.

9. Linearantriebsmechanismus (100, 200, 300, 400) nach einem der Ansprüche 1 bis 8, **dadurch gekennzeichnet, dass** die erste Welle (121, 521, 821) eine gestufte Welle oder eine gerade Welle ist.

10. Linearantriebsmechanismus (100) nach Anspruch 1, **dadurch gekennzeichnet, dass** ein Abschnitt der zweiten Welle (122) innerhalb des Antriebsschlitzes (23) angeordnet ist, die Längsachse der ersten Welle (121) sich mit der Drehachse (L) schneidet, das erste Ende (1211) der ersten Welle (121) mit dem Sitz (11) durch eine bewegbare Verbindung verbunden ist, ein erster eingeschlossener Winkel (A1) zwischen der ersten Welle (121) und dem Sitz (11) einstellbar ist, das zweite Ende (1212) der ersten Welle (121) mit der zweiten Welle (122) durch ein weiteres bewegbares Gelenk verbunden ist, ein zweiter eingeschlossener Winkel (A2) zwischen der ersten Welle (121) und der zweiten Welle (122) einstellbar ist, und eine Längsachse der zweiten Welle (122) parallel zu Drehachse (L) ist und von dieser versetzt wird, indem der erste eingeschlossene Winkel (A1) und der zweite eingeschlossene Winkel (A2) eingestellt werden.

11. Linearantriebsmechanismus (100) nach Anspruch 10, **dadurch gekennzeichnet, dass** der Antriebsschlitz (23) eine Innenwand (221) aufweist, die zweite Welle (122) die Kraft auf die Innenwand (221) des Antriebsschlitzes (23) ausübt, um die sich linear bewegende Komponente (20) anzutreiben, sich linear entlang der zweiten Richtung zu bewegen, eine Verschiebung einer Bewegung des Abschnitts der zweiten Welle (122) entlang der zweiten Richtung nicht kleiner ist als ein Durchmesser des Abschnitts der zweiten Welle (122), und darin dass, wenn der erste eingeschlossene Winkel (A1) abnimmt und der zweite eingeschlossene Winkel (A2) zunimmt, die Versetzung der Bewegung des Abschnitts der zweiten Welle (122) entlang der zweiten Richtung zunimmt, so dass der Hub (S) der linearen Bewegung der linear bewegbaren Komponente (20) entlang der zweiten Richtung zunimmt, und wenn der erste eingeschlossene Winkel (A1) zunimmt und der zweite eingeschlossene Winkel (A2) abnimmt, die Versetzung der Bewegung des Abschnitts der zweiten Welle (122) entlang der zweiten Richtung abnimmt, so dass der Hub (S) der linearen Bewegung der linear bewegbaren Komponente (20) entlang der zweiten Richtung abnimmt.

12. Linearantriebsmechanismus (100) nach Anspruch 10, **dadurch gekennzeichnet, dass** die erste Welle (121) mit dem Sitz (11) und der zweiten Welle (122) durch zwei Drehgelenke verbunden ist.

13. Linearantriebsmechanismus (100, 200, 300, 400) nach einem der Ansprüche 1 bis 12, **dadurch gekennzeichnet, dass** der Linearantriebsmechanismus (100, 200, 300, 400) für ein handgehaltenes Rehabilitationsgerät oder eine handgehaltene Werkzeugmaschine angepasst ist.

## Revendications

1. Mécanisme d'entraînement linéaire (100, 200, 300, 400) à course variable, le mécanisme d'entraînement linéaire (100, 200, 300, 400) comprend:
un corps principal (10, 50, 70, 80) comprenant:
un siège (11, 51, 71, 81) comprenant un arbre rotatif (13) sur lequel est formé un axe de rotation (L); et
un arbre mobile (12, 52, 82) comprenant un premier arbre (121, 521, 821) et un deuxième arbre (122, 522), le premier arbre (121, 521, 821) comprenant une première extrémité (1211) et une deuxième extrémité (1212), la première extrémité (1211) étant reliée au siège (11, 51, 71, 81), la deuxième extrémité (1212) étant reliée au deuxième arbre (122, 522), un axe longitudinal du premier arbre (121, 521, 821) étant incliné par rapport à l'axe de rotation (L);
un composant mobile linéaire (20, 60) comprenant une partie distale (21) et une partie proximale (22, 62) par rapport à la partie distale (21), une fente d'entraînement (23, 63) étant formée sur la partie proximale (22, 62) du composant mobile linéaire (20, 60), l'arbre mobile (12, 52, 82) passant à travers la fente d'entraînement (23, 63), le composant mobile linéaire (20, 60) étant capable de se rapprocher ou de s'éloigner du siège (11, 51, 71, 81) le long d'une première direction parallèle à l'axe de rotation (L);
un composant de guidage (30) pour guider un mouvement linéaire du composant mobile linéaire (20, 60) le long d'une deuxième direction perpendiculaire à l'axe de rotation (L), une fente de guidage (31) étant formée sur le composant de guidage (30), la partie distale (21) du composant mobile linéaire (20, 60) étant située à l'intérieur de la fente de guidage (31) et pouvant coulisser par rapport à la fente de guidage (31); et
un composant d'entraînement (40) relié à l'arbre rotatif (13), le composant d'entraînement (40) étant utilisé pour entraîner le corps principal (10, 50, 70, 80) en rotation autour de l'axe de rotation (L);
dans lequel l'arbre mobile (12, 52, 82) applique une force à une paroi de la fente d'entraînement (23, 63) pour entraîner le composant mobile linéaire (20, 60) à se déplacer linéairement le long de la deuxième direction lorsque le composant d'entraînement (40) entraîne le corps principal (10, 50, 70, 80) à tourner;
dans lequel une course (S) du mouvement linéaire du composant mobile linéaire (20, 60) le long de la deuxième direction varie avec une distance entre le composant mobile linéaire (20, 60) et le siège (11, 51, 71, 81) le long de la première direction.

2. Mécanisme d'entraînement linéaire (200, 300, 400) selon la revendication 1, **caractérisé en ce qu'**une partie du premier arbre (521, 821) est située à l'intérieur de la fente d'entraînement (63), le premier arbre (521, 821) est relié à une périphérie du siège (51, 71, 81), l'axe longitudinal du premier arbre (521, 821) coupe l'axe de rotation (L), et un axe longitudinal du deuxième arbre (522) coïncide avec l'axe de rotation (L).

3. Mécanisme d'entraînement linéaire (200, 300, 400) selon la revendication 2, **caractérisé en ce que** la fente d'entraînement (63) est une fente creuse rectangulaire et comprend deux parois internes longues (621) symétriques l'une de l'autre et deux parois internes courtes (622) symétriques l'une de l'autre, une longueur de chaque paroi interne longue (621) est supérieure à un diamètre du siège (51, 71, 81), et une longueur de chaque paroi interne courte (622) est inférieure au diamètre du siège (51, 71, 81).

4. Mécanisme d'entraînement linéaire (200, 300, 400) selon la revendication 3, **caractérisé en ce que** le premier arbre (521, 821) applique la force aux deux parois internes longues (621) de la fente d'entraînement (63) pour entraîner le composant mobile linéaire (60) à se déplacer linéairement le long de la deuxième direction, lorsque la distance entre le composant mobile linéaire (60) et le siège (51, 71, 81) le long de la première direction diminue, un déplacement d'un mouvement de la partie du premier arbre (521, 821) le long de la deuxième direction augmente, de sorte que la course (S) du mouvement linéaire du composant mobile linéaire (60) le long de la deuxième direction augmente, et lorsque la distance entre le composant mobile linéaire (60) et le siège (51, 71, 81) le long de la première direction augmente, le déplacement du mouvement de la partie du premier arbre (521, 821) le long de la deuxième direction diminue, de sorte que la course (S) du mouvement linéaire du composant mobile linéaire (60) le long de la deuxième direction diminue.

5. Mécanisme d'entraînement linéaire (200, 300, 400) de la revendication 3, **caractérisé en ce que** chaque paroi interne longue (621) et chaque paroi interne courte (622) sont des parois inclinées.

6. Mécanisme d'entraînement linéaire (300) de la revendication 1, **caractérisé en ce que** le siège (71) est cubique.

7. Mécanisme d'entraînement linéaire (100, 200) selon la revendication 1, **caractérisé en ce que** la fente d'entraînement (23) comprend une paroi interne (221), une longueur d'une ligne droite entre deux points quelconques sur la paroi interne (221) passant par l'axe de rotation (L) n'est pas inférieure à un diamètre maximum du premier arbre (121) et pas supérieure à un diamètre maximum du siège (11).

8. Mécanisme d'entraînement linéaire (100, 200) selon la revendication 7, **caractérisé en ce qu'**une partie du premier arbre (521) est située à l'intérieur de la fente d'entraînement (23), le premier arbre (521) applique la force à la paroi interne (221) de la fente d'entraînement (23) pour entraîner le composant mobile linéaire (20) à se déplacer linéairement le long de la deuxième direction, lorsque la distance entre le composant mobile linéaire (20) et le siège (51) le long de la première direction diminue, un déplacement d'un mouvement de la partie du premier arbre (521) le long de la deuxième direction augmente, de sorte que la course (S) du mouvement linéaire du composant mobile linéaire (20) le long de la deuxième direction augmente, et lorsque la distance entre le composant mobile linéaire (20) et le siège (51) le long de la première direction augmente, le déplacement du mouvement de la partie du premier arbre (521) le long de la deuxième direction diminue, de sorte que la course (S) du mouvement linéaire du composant mobile linéaire (20) le long de la deuxième direction diminue.

9. Mécanisme d'entraînement linéaire (100, 200, 300, 400) de l'une quelconque des revendications 1 à 8, **caractérisé en ce que** le premier arbre (121, 521, 821) est un arbre étagé ou un arbre droit.

10. Mécanisme d'entraînement linéaire (100) selon la revendication 1, **caractérisé en ce qu'**une partie du deuxième arbre (122) est située à l'intérieur de la fente d'entraînement (23), l'axe longitudinal du premier arbre (121) coupe l'axe de rotation (L), la première extrémité (1211) du premier arbre (121) est reliée au siège (11) par un joint mobile, un premier angle inclus (A1) entre le premier arbre (121) et le siège (11) est réglable, la deuxième extrémité (1212) du premier arbre (121) est reliée au deuxième arbre (122) par un autre joint mobile, un deuxième angle inclus (A2) entre le premier arbre (121) et le deuxième arbre (122) est réglable, et un axe longitudinal du deuxième arbre (122) est parallèle à et décalé de l'axe de rotation (L) en ajustant le premier angle inclus (A1) et le deuxième angle inclus (A2).

11. Mécanisme d'entraînement linéaire (100) selon la revendication 10, **caractérisé en ce que** la fente d'entraînement (23) comprend une paroi interne (221), le deuxième arbre (122) applique la force à la paroi interne (221) de la fente d'entraînement (23) pour entraîner le composant mobile linéaire (20) à se déplacer linéairement le long de la deuxième direction, un déplacement d'un mouvement de la partie du deuxième arbre (122) le long de la deuxième direction n'est pas inférieur à un diamètre de la partie du deuxième arbre (122), lorsque le premier angle inclus (A1) diminue et le deuxième angle inclus (A2) augmente, le déplacement du mouvement de la partie du deuxième arbre (122) le long de la deuxième direction augmente, de sorte que la course (S) du mouvement linéaire du composant mobile linéaire (20) le long de la deuxième direction augmente, et lorsque le premier angle inclus (A1) augmente et le deuxième angle inclus (A2) diminue, le déplacement du mouvement de la partie du deuxième arbre (122) le long de la deuxième direction diminue, de sorte que la course (S) du mouvement linéaire du composant mobile linéaire (20) le long de la deuxième direction diminue.

12. Mécanisme d'entraînement linéaire (100) selon la revendication 10, **caractérisé en ce que** le premier arbre (121) est relié au siège (11) et au deuxième arbre (122) par deux joints pivotants.

13. Mécanisme d'entraînement linéaire (100, 200, 300, 400) de l'une quelconque des revendications 1 à 12, **caractérisé en ce que** le mécanisme d'entraînement linéaire (100, 200, 300, 400) est adapté à un dispositif de réhabilitation portatif ou à une machine-outil portative.
